# EUROPÄISCHE PATENTSCHRIFT

(11) **EP 1 331 075 B1**
(45) Veröffentlichungstag und Bekanntmachung des Hinweises auf die Patenterteilung: **01.03.2006**
(21) Anmeldenummer: 02028722.3
(22) Anmeldetag: 20.12.2002
(51) Int. Cl.: B29C 45/00, F16K 1/22

(54) **Baugruppe bestehend aus Gehäuse und Klappeinheit**
Assembly comprising housing and flap-unit
Ensemble comprenant boîtier et unité d'un volet

(30) Priorität: 24.01.2002 DE 10202760
(43) Veröffentlichungstag der Anmeldung: 30.07.2003
(73) Patentinhaber: TRW Automotive Electronics & Components GmbH & Co. KG, 67677 Enkenbach/Alsenborn (DE)
(72) Erfinder: Krause, Reinhard, 95615 Marktredwitz-Brand (DE)
(74) Vertreter: Sties, Jochen

(56) Entgegenhaltungen:
- EP-A- 0 702 175
- DE-A- 4 404 865
- DE-A- 19 735 133
- US-A- 5 875 758
- US-B1- 6 263 917
- PATENT ABSTRACTS OF JAPAN vol. 008, no. 073 (M-287), 5. April 1984 (1984-04-05) -& JP 58 219031 A (SONY KK), 20. Dezember 1983 (1983-12-20)
- PATENT ABSTRACTS OF JAPAN vol. 2000, no. 25, 12. April 2001 (2001-04-12) & JP 2001 234759 A (MIKUNI CORP), 31. August 2001 (2001-08-31)

## Beschreibung

Die Erfindung betrifft eine Baugruppe bestehend aus einem Gehäuse und einer Klappeneinheit, wobei das Gehäuse und die Klappeneinheit jeweils einstückige Spritzgußteile sind und die Klappeneinheit im Gehäuse gelagert ist, die Klappeneinheit mindestens zwei Klappenelemente und einen zwischen jeweils zwei Klappenelementen angeordneten Verbindungsabschnitt aufweist.

Derartige Baugruppen dienen als Steuerorgane für gasförmige oder flüssige Medien, die im folgenden als Fluide bezeichnet werden. Die Klappeneinheit ist so im Gehäuse schwenkbar gelagert, daß in einer geöffneten Stellung der Klappeneinheit in Bezug auf das Gehäuse ein maximaler Durchsatz des Fluids und in einer geschlossenen Stellung ein minimaler Durchsatz oder eine Sperrung des Fluids möglich ist. Solche Baugruppen können beispielsweise in Anlagen der Heizungs-, Lüftungs- und Klimatechnik, insbesondere in solchen von Kraftfahrzeugen, eingesetzt werden, um den Frischluft- oder den Warmluftstrom zu steuern. Ein Beispiel für eine solche Klappeneinheit ist aus der DE-A-197 35 133 bekannt.

Aus der JP-A-58219031 ist ein Zahnrad bekannt, das eine einstückig mit ihm ausgeführte Welle aufweist. Die Welle ist in eine Lagerbuchse eingespritzt. Zwischen Welle und Zahnrad ist ein Hinterschnitt vorgesehen, der verhindern soll, daß sich die Welle in der Lagerbuchse verklemmt.

Es wäre wünschenswert, die beiden Bauteile der Baugruppe als einstückige Spritzgußteile auszubilden, von denen das eine unlösbar in das andere integriert ist. Es ist nämlich grundsätzlich möglich, ein Spritzgußteil in einem zweiten so aushärten zu lassen, daß sich die beiden Spritzgußteile relativ zueinander bewegen können. Ein solches Verfahren ist beispielsweise aus der DE 33 40 122 A1 bekannt. Bei diesem Verfahren wird ein erstes Spritzgußteil in einer ersten Form gefertigt. Dann wird das erste Spritzgußteil aus der ersten Form entnommen und in eine zweite Form verbracht. Dabei härtet das erste Spritzgußteil so weit aus und gewinnt so weit an Festigkeit, daß ein Spritzgußmaterial in die zweite Form eingespritzt werden kann, das beispielsweise eine Öffnung des ersten Spritzgußteils ausfüllt und darin zu einem zweiten Spritzgußteil aushärtet. Das zweite Spritzgußteil ist dann in dem ersten Spritzgußteil beweglich, kann jedoch unlösbar mit diesem verbunden sein. In jedem Fall ergibt sich der wesentliche Vorteil, daß das zweite Spritzgußteil nicht am ersten montiert werden muß.

Da das erste Spritzgußteil bereits teilweise verfestigt ist, bevor das zweite Spritzgußteil ausgebildet wird, hat das erste Spritzgußteil bereits einen Teil seiner unvermeidbaren Schwindung erfahren, bevor das Material für das zweite Spritzgußteil eingespritzt wird. Dies kann dazu führen, daß das zweite Spritzgußteil sich auf dem ersten Spritzgußteil verklemmt, wenn das zweite Spritzgußteil nun seinerseits schwindet. Insbesondere bei einer Baugruppe der eingangs genannten Art führt die Schwindung des Verbindungsabschnittes zwischen zwei benachbarten Klappen dazu, daß sich die Klappen im Gehäuse verklemmen.

Die Aufgabe der Erfindung besteht daher darin, eine Baugruppe der eingangs genannten Art dahingehend weiterzubilden, daß die Klappeneinheit in dem Gehäuse ausgebildet werden kann, ohne daß die Beweglichkeit der Klappeneinheit relativ zum Gehäuse beeinträchtigt ist.

Zu diesem Zweck ist gemäß der Erfindung vorgesehen, daß der Verbindungsabschnitt ein elastisches Ausgleichselement aufweist, das schwindungsbedingte Längenänderungen insbesondere des Verbindungsabschnittes ausgleichen kann, und daß das Ausgleichselement ein Federelement ist. Allgemein ausgedrückt beruht die Erfindung darauf, eine Längenkompensation des Verbindungsabschnittes zwischen zwei benachbarten Klappen durch das einstückig mit dem Verbindungsabschnitt ausgeführte Ausgleichselement zu ermöglichen. Das Ausgleichselement gibt elastisch nach, wenn das Verbindungselement schwindet, so daß sich lediglich eine geringe Vorspannung zwischen zwei benachbarten Klappen der Klappeneinheit ergibt. Die sich durch die Vorspannung ergebende Reibung ist vernachlässngbar. Die Kompensation durch das Ausgleichselement ist so groß, daß der Anguß für die Klappeneinheit am Werkzeug ohne Rücksicht auf die Schwindung des Verbindungsabschnittes angeordnet werden kann.

Vorteilhafte Ausgestaltungen der Erfindung ergeben sich aus den Unteransprüchen.

Die Erfindung wird nachfolgend unter Bezugnahme auf eine bevorzugte Ausführungsform beschrieben, die in den beigefügten Zeichnungen dargestellt ist. In den Zeichnungen zeigen:
- Figur 1 eine perspektivische Ansicht des Gehäuses;
- Figur 2 eine Schnittansicht des Gehäuses;
- Figur 3 eine perspektivische Ansicht einer Klappeneinheit;
- Figur 4 eine weitere perspektivische Ansicht der Klappeneinheit;
- Figur 5 eine Schnittansicht der Klappeneinheit;
- Figur 6 eine perspektivische Ansicht der Baugruppe aus Gehäuse und Klappeneinheit, wobei sich die Klappeneinheit in einer geöffneten Stellung befindet;
- Figur 7 eine weitere perspektivische Ansicht der Baugruppe, wobei sich die Klappeneinheit in einer geschlossenen Stellung befindet;
- Figur 8 eine Schnittansicht der Baugruppe, wobei sich die Klappeneinheit in der geschlossenen Stellung befindet;
- Figur 9 eine Schnittansicht der Baugruppe entlang des Schnitts IX-IX der Figur 8;
- Figur 10 eine Schnittansicht der Baugruppe entlang des Schnitts X-X der Figur 8; und .
- Figur 11 eine Schnittansicht der Baugruppe entlang des Schnitts XI-XI der Figur 8.

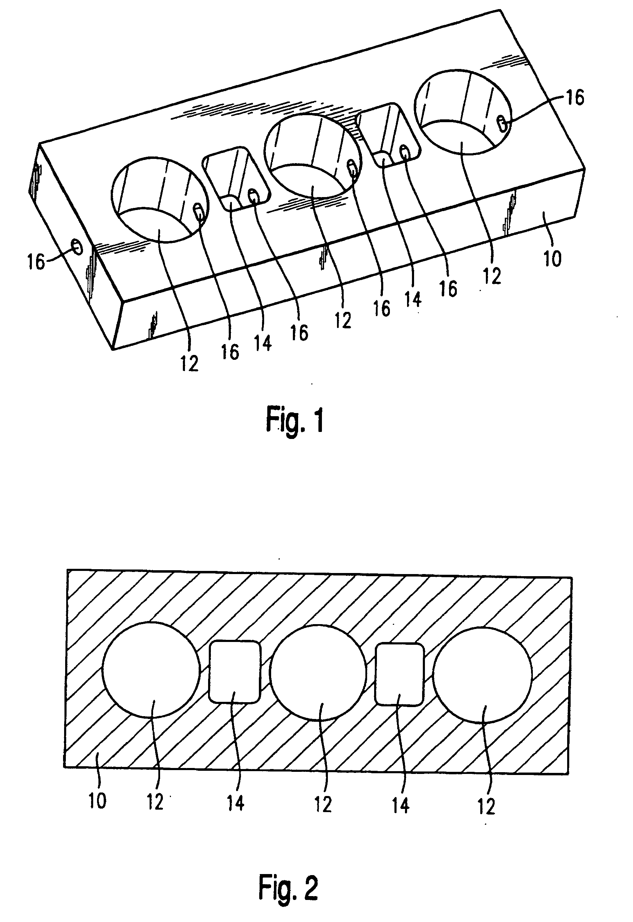

In den Figuren 1 und 2 sieht man das Gehäuse 10 mit mehreren Klappenöffnungen 12, mehreren Durchbrüchen 14 und einer Durchgangsöffnung 16. Die Klappenöffnungen 12 weisen einen kreisförmigen Querschnitt auf, die Durchbrüche haben einen annähernd rechteckigen Querschnitt. Jeweils ein Durchbruch 14 ist zwischen jeweils zwei Klappenöffnungen 12 angeordnet. Die Durchgangsöffnung 16 ist von den Klappenöffnungen 12 und den Durchbrüchen 14 unterbrochen.

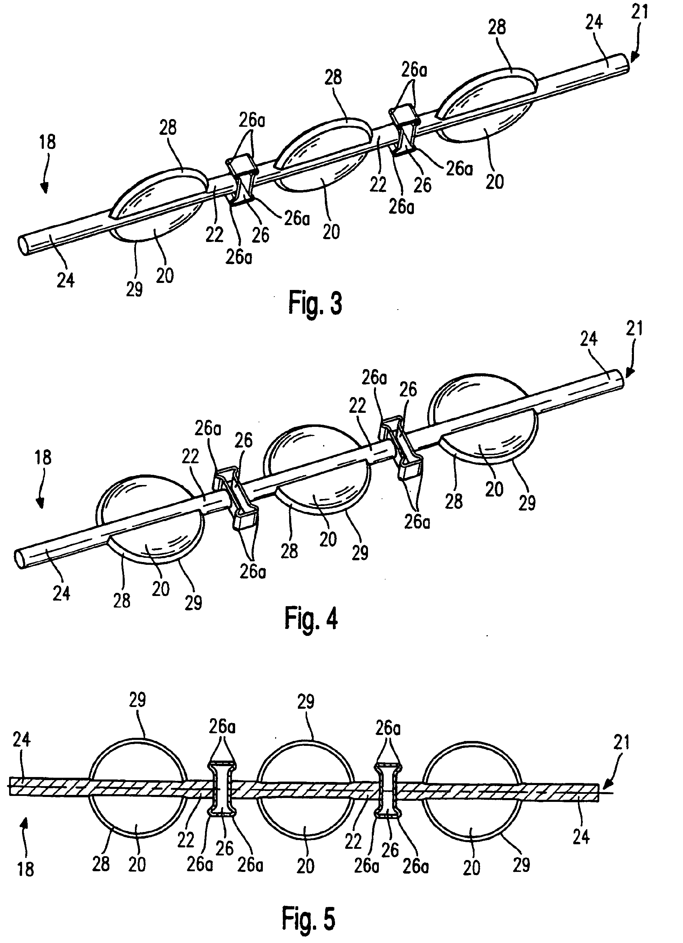

Die Figuren 3, 4 und 5 zeigen eine Klappeneinheit 18 mit Klappenelementen 20 und einer Welle 21. Die Welle 21 weist Verbindungsabschnitte 22, Endabschnitte 24 sowie Ausgleichselemente 26 auf.

Die Verbindungsabschnitte 22 der Welle 21 sind stabförmig und jeweils zwischen zwei Klappenelementen 20 angeordnet. Das Ausgleichselement 26 befindet sich mittig auf dem entsprechenden Verbindungsabschnitt 22. Es ist als im wesentlichen rechteckiges Rahmenelement aufgebaut, das an den Ecken jeweils Ausbuchtungen 26a aufweist. Die Scheitelpunkte der Ausbuchtungen ragen, in einer Richtung parallel zur Längsachse der Verbindungselemente betrachtet, über die längeren Seiten des Rahmens hinaus. Anders ausgedrückt ist der Abstand zwischen den längeren Seiten des Rahmens kleiner als die Gesamtbreite des Rahmens. In radialer Richtung betrachtet ragen die Ausbuchtungen nicht über einen Abstand von der Längsachse hinaus, der von den kürzeren Seiten des Rahmens vorgegeben ist.

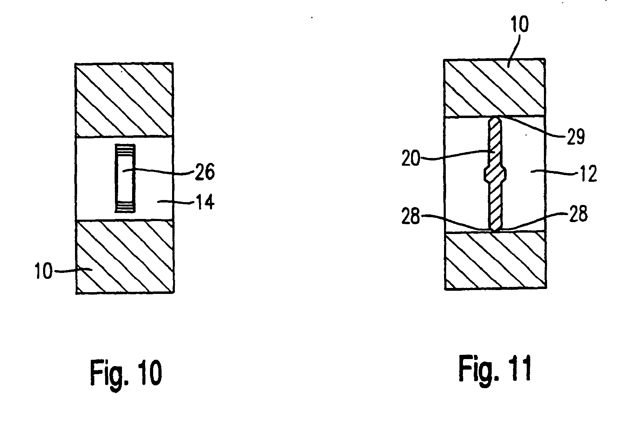

Die Klappenelemente 20 sind Scheibenelemente mit kreisförmigem Querschnitt. Die Welle 21 und die Klappenelemente 20 sind jeweils auf einer Durchmesserlinie des Klappenelements einstückig miteinander verbunden. Die Klappenelemente weisen alle die gleiche Ausrichtung auf, d.h. alle Scheibenelemente liegen in einer gemeinsamen Ebene. Jedes Klappenelement 20 hat an seinem äußeren Rand beidseitig jeweils eine Fase 28, durch den ein scharfer Klappenrand 29 ausgebildet wird (siehe auch Figur 11).

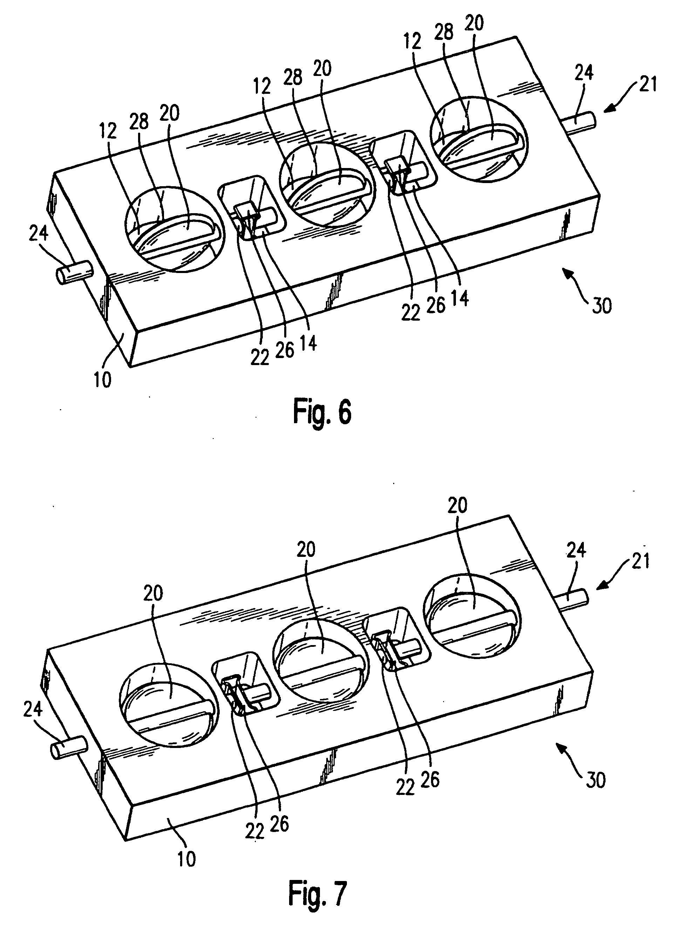

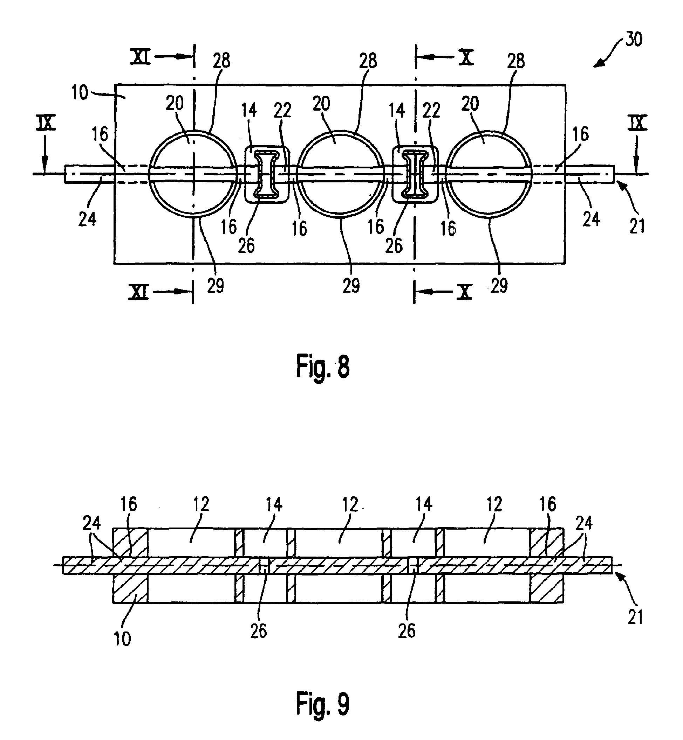

In den Figuren 6 bis 11 ist eine Baugruppe 30 dargestellt, die aus dem Gehäuse 10 und der Klappeneinheit 18 besteht. Wie in den Figuren 8 und 9 am besten zu sehen ist, ist die Klappeneinheit 18 mit den Endabschnitten 24 der Welle 21 in dem bezüglich Figur 8 und 9 äußerst rechten und linken Abschnitt der Durchgangsöffnung 16 des Gehäuses 10 gelagert, während die Verbindungsabschnitte 22 in den zwischen den Klappenelementen 20 angeordneten Abschnitten der Durchgangsöffnung 16 gelagert sind. Die Klappenelemente 20 befinden sich jeweils in den Klappenöffnungen 12. Die Ausgleichselemente 26 sind so angeordnet, daß sie in den Durchbrüchen 14 liegen.

In Figur 6 ist die Baugruppe 30 bei geöffneter Stellung der Klappenelemente 20 darstellt. In dieser Stellung liegen die Klappenelemente etwa senkrecht zur Mittelachse der Klappenöffnungen, so daß ein maximaler Durchflußquerschnitt freigegeben ist.

In den Figuren 7 bis 11 ist die Baugruppe mit den Klappenelementen in der geschlossenen Stellung gezeigt. Wie insbesondere Figur 11 gut erkennen läßt, liegt das Klappenelement 20 mit dem Klappenrand 29 in den Klappenöffnungen 12 dicht am Gehäuse 10 an, so daß kein Durchfluß möglich ist.

Die Ausgleichselemente 26 können Fertigungstoleranzen der Klappeneinheit 18, z. B. im Maß der Verbindungsabschnitte, oder des Gehäuses 10 ausgleichen, so daß sich nebeneinanderliegende Klappenelemente 20 nicht relativ zueinander im Gehäuse verspannen können. Die Ausbuchtungen 26a sorgen dafür, daß der Rahmen eine vergleichsweise geringe Federkonstante bei Belastungen aufweist, die entlang der Längsachse der Verbindungsabschnitte wirken. Dies führt dazu, daß eventuelle Toleranzen, die durch Breitenänderung des Rahmens, also Änderungen der Abmessung in einer Richtung parallel zur Längsachse der Verbindungsabschnitte, ausgeglichen werden, nur zu einer geringen Längskraft führen, was wiederum nur zu einer geringen Reibung der Klappeneinheit im Gehäuse führt. Ungeachtet der geringen Steifigkeit des Rahmens bei Belastungen in Längsrichtung weist er eine hohe Torsionssteifigkeit auf, was gewährleistet, daß sich alle Klappenelemente immer in derselben Ausrichtung befinden.

Die beschriebene Baugruppe kann mit dem Verfahren entsprechend der DE 33 40 122 A1 hergestellt werden. Dabei wird in einer ersten Form zuerst das Gehäuse 10 als Spritzgußteil gefertigt. Dieses wird dann aus der ersten Form herausgenommen und in eine zweite Form eingebracht. Dabei kühlt das Gehäuse 10 ab, wobei es schwindet. In der zweiten Form wird nun die Klappeneinheit 18 in das Gehäuse 10 eingespritzt. Die so hergestellt Baugruppe wird dann aus der zweiten Form entnommen. Die Schwindung der Klappeneinheit 18 und insbesondere der Verbindungsabschnitte erfolgt dann im Gehäuse. Ohne die Ausgleichselemente 26 würde dies zu einem Verklemmen der Klappenelemente 20 in den Klappenöffnungen 12 führen. Die Ausgleichselemente 26 gleichen den Abstand zwischen den Klappenelementen 20 wieder so weit aus, daß diese frei in den Klappenöffnungen 12 schwenkbar sind.

Grundsätzlich kann auch zuerst die Klappeneinheit gespritzt und dann das Gehäuse auf diese aufgespritzt werden.

## Patentansprüche

1. Baugruppe bestehend aus einem Gehäuse (10) und einer Klappeneinheit (18), wobei das Gehäuse und die Klappeneinheit jeweils einstückige Spritzgußteile sind und die Klappeneinheit im Gehäuse gelagert ist, die Klappeneinheit mindestens zwei Klappenelemente (20) und einen zwischen jeweils zwei Klappenelementen angeordneten Verbindungsabschnitt (22) aufweist, **dadurch gekennzeichnet, daß** der Verbindungsabschnitt ein Ausgleichselement (26) aufweist, das schwindungsbedingte Längenänderungen insbesondere des Verbindungsabschnittes ausgleichen kann, und daß das Ausgleichselement (26) ein Federelement ist.

2. Baugruppe nach Anspruch 1, **dadurch gekennzeichnet, daß** der Verbindungsabschnitt (22) im wesentlichen stabförmig ist und das Ausgleichselement (26) im wesentlichen in der Mitte des Verbindungsabschnitts angeordnet ist.

3. Baugruppe nach einem der vorhergehenden Ansprüche, **dadurch gekennzeichnet, daß** das Ausgleichselement (26) im wesentlichen als rechteckiges Rahmenelement aufgebaut ist.

4. Baugruppe nach Anspruch 3, **dadurch gekennzeichnet, daß** das Ausgleichselement (26) Ausbuchtungen (26a) aufweist.

5. Baugruppe nach einem der vorhergehenden Ansprüche, **dadurch gekennzeichnet, daß** das Gehäuse mindestens eine Durchgangsöffnung (16) aufweist, in welcher die Klappeneinheit (18) gelagert ist.

## Claims

1. An assembly consisting of a housing (10) and a flap unit (18), the housing and the flap unit being each one-piece injection-molded parts and the flap unit being mounted in the housing, the flap unit having at least two flap elements (20) and a connection section (22) arranged between two respective flap elements, **characterized in that** the connection section has a compensation element (26) that can compensate for shrinkage-induced changes in length, in particular of the connection section, and that the compensation element (26) is a spring element.

2. The assembly according to Claim 1, **characterized in that** the connection section (22) is essentially rod-shaped and the compensation element (26) is arranged essentially in the middle of the connection section.

3. The assembly according to any of the preceding claims, **characterized in that** the compensation element (26) is configured essentially as a rectangular frame element.

4. The assembly according to Claim 3, **characterized in that** the compensation element (26) has protrusions (26a).

5. The assembly according to any of the preceding claims, **characterized in that** the housing has at least one passage opening (16) in which the flap unit (18) is mounted.

## Revendications

1. Ensemble constitué par un boîtier (10) et une unité de clapet (18), le boîtier et l'unité de clapet étant une pièce respective moulée par injection d'un seul tenant et l'unité de clapet étant montée dans le boîtier, l'unité de clapet présentant au moins deux éléments de clapet (20) et un tronçon de liaison (22) agencé entre deux éléments de clapet respectifs, **caractérisé en ce que** le tronçon de liaison présente un élément de compensation (26) qui peut compenser des variations de longueur dues au retrait, et **en ce que** l'élément de compensation (26) est un élément ressort.

2. Ensemble selon la revendication 1, **caractérisé en ce que** le tronçon de liaison (22) est sensiblement en forme de barre et l'élément de compensation (26) est agencé sensiblement au milieu du tronçon de liaison.

3. Ensemble selon l'une des revendications précédentes, **caractérisé en ce que** l'élément de compensation (26) est réalisé sensiblement sous forme d'élément de cadre rectangulaire.

4. Ensemble selon la revendication 3, **caractérisé en ce que** l'élément de compensation (26) présente des saillies (26a).

5. Ensemble selon l'une des revendications précédentes, **caractérisé en ce que** le boîtier présente au moins une ouverture de passage (16) dans laquelle est montée l'unité de clapet (18).
